(19) **Europäisches Patentamt**

**European Patent Office**

**Office européen des brevets**

(11) Veröffentlichungsnummer: **0 314 150 B1**

(12) # EUROPÄISCHE PATENTSCHRIFT

(45) Veröffentlichungstag der Patentschrift: **07.10.92**

(21) Anmeldenummer: **88117953.5**

(22) Anmeldetag: **27.10.88**

(51) Int. Cl.⁵: **H01C 10/32**, H01C 17/22

(54) **Drehpotentiometer.**

(30) Priorität: **28.10.87 DE 3736546**

(43) Veröffentlichungstag der Anmeldung:
**03.05.89 Patentblatt 89/18**

(45) Bekanntmachung des Hinweises auf die
Patenterteilung:
**07.10.92 Patentblatt 92/41**

(84) Benannte Vertragsstaaten:
**DE FR GB IT**

(56) Entgegenhaltungen:
**EP-A- 0 096 948**
**DE-A- 2 337 466**
**DE-A- 2 826 786**
**DE-A- 3 524 308**
**GB-A- 2 191 897**

(73) Patentinhaber: **Wilhelm Ruf KG**
**Schwanthaler Strasse 18**
**W-8000 München 2(DE)**

(72) Erfinder: **Burger, Rita**
**Am Seeschneidfeld 1**
**W-8018 Grafing(DE)**
Erfinder: **Pissulla, Horst**
**Gottfried-Keller-Strasse 288**
**W-8012 Ottobrunn(DE)**

(74) Vertreter: **von Bülow, Tam, Dr. et al**
**Patentanwalt Mailänder Strasse 13**
**W-8000 München 90(DE)**

## Beschreibung

Die Erfindung bezieht sich auf ein Potentiometer gemäß dem Oberbegriff des Patentanspruches 1. Derartige Potentiometer sind aus folgenden Druckschriften bekannt: DE-OS 34 44 229, DE-OS 35 24 308, EP 0 124 346 A2, GB 21 22 033 sowie der älteren, nicht vorveröffentlichten Patentanmeldung P 36 24 364.9

Die DE-OS 34 44 229 beschreibt die Möglichkeit, das Potentiometer zu justieren, wofür ein gegenüber dem Federträger verdrehbarer Zwischenträger vorgesehen ist, an welchem die Schleiferfeder angenietet ist. Damit kann man lediglich die "Nullstellung" des Potentiometers justieren, jedoch nicht seinen Widerstandswert abgleichen.

Bei der GB 21 22 033 ist es bekannt, die Widerstandsbahn durch einen feinen radial zur gekrümmten Widerstandsbahn verlaufenden Schnitt abzugleichen, wobei sich dieser Schnitt außerhalb des von dem Schleifkontakt der Schleiferfeder überstrichenen Bereich befindet.

Nachteilig hieran ist, daß der elektrische Widerstandswert der Widerstandsbahn vor dem Einbau des Widerstandsträgers in das Potentiometer eingestellt werden muß, so daß weitere Einflüsse w.z.B. der Kontaktdruck zwischen Schleiferfeder und Widerstandsbahn nicht berücksichtigt werden können. Damit erhält man trotz eines Abgleiches immer noch beträchtliche Toleranzen bei den elektrischen Werten des Potentiometers.

Aufgabe der Erfindung ist es, das Potentiometer der eingangs genannten Art dahingehend zu verbessern, daß ein sehr präziser Abgleich der elektrischen Werte des Potentiometers möglich ist.

Diese Aufgabe wird bei dem gattungsbildenden Potentiometer durch die im Kennzeichenteil des Anspruches 1 angegebenen Merkmale gelöst. Vorteilhafte Ausgestaltung und Weiterbildung der Erfindung sind den Unteransprüchen zu entnehmen.

Der Grundgedanke der Erfindung besteht darin, im Gehäuse eine Öffnung vorzusehen, durch welche man bei fertig montiertem Potentiometer noch einen Abgleich vornehmen kann.

Im folgenden wird ein Ausführungsbeispiel der Erfindung im Zusammenhang mit der Zeichnung ausführlicher erläutert. Es zeigt:

Fig. 1     Einen Längsschnitt des Potentiometers;

Fig. 2     eine Draufsicht auf die "Unterseite" des Widerstandsträgers; und

Fig. 3     eine Draufsicht auf die "Oberseite" des Potentiometers.

Das Potentiometer hat ein im wesentlichen zylindrisches Gehäuse 1, das in seinem Inneren eine senkrecht zur Zylinderachse 2 verlaufende Trennwand 3 mit einer koaxial zur Zylinderachse 2 verlaufenden zentralen Öffnung 4 besitzt. Oberhalb der Trennwand 3 hat das Gehäuse eine Stufe 5, auf der ein Widerstandsträger 6 aufliegt. Zum Verschließen des Gehäuses 1 sind ein Gehäusedeckel 7 und ein weiterer, in eine Öffnung 8 des Gehäusedeckels einsetzbarer weiterer Deckel 9 vorgesehen. Der Gehäusedeckel hat einen in das Innere des Gehäuses ragenden Stutzen 10, der an seinem Ende eine Kante 11 aufweist, die mit der Oberseite 12 des Widerstandsträgers 6 in Kontakt steht, so daß der Widerstandsträger zwischen der Kante 5 und der Kante 11 festgehalten ist. Der Gehäusedeckel 7 besitzt im Bereich seines oberen Endes einen radial nach außen vorspringenden Bund 13, der hinter einer Rastnase 14 des Gehäuses einrastet und damit unverlierbar festgehalten ist.

Der Widerstandsträger 6 hat eine koaxial zur Achse 2 verlaufende Öffnung 15, durch die ein Abschnitt einer Lagerbuchse 16 hindurchragt, wobei eine Kante 17 der Lagerbuchse 16 an der Unterseite 18 des Widerstandsträgers 6 abgestützt ist.

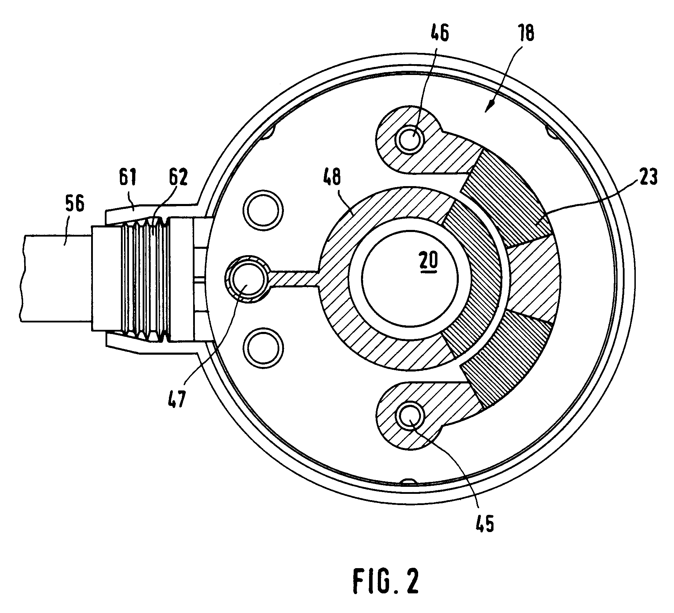

Die Lagerbuchse 16 ist drehfest mit einem Schleiferträger 19 verbunden, wobei ein zylindrischer, hohler Abschnitt 20 durch die Lagerbuchse 16 hindurchragt. Ein scheibenförmiger Teil 21 des Schleiferträgers hält eine oder mehrere Schleiferfedern 22, so daß diese sich mit dem Schleiferträger drehen und dabei mit ihren Kontakten auf einer auf der Unterseite 18 des Widerstandsträgers aufgebrachten Widerstandsbahn 23 (Fig. 2) schleifen. An der Unterseite des scheibenförmigen Teiles 21 ist ein axial vorspringender Ring 24 angeformt, der sich auf einer Metallscheibe 25 abstützt, welche ihrerseits über einen federelastischen Dichtungsring 26 auf der Trennwand 3 abgestützt ist. Der Dichtungsring ist hier als sog. "Quad-Ring" ausgebildet, der in einer Ringnut 27 der Trennwand 3 gehalten ist. Der zylindrische Abschnitt 20 des Federträgers 19 erstreckt sich beidseitig des scheibenförmigen Teiles 21 und ist an seiner Unterseite in der Öffnung 4 der Trennwand 3 zentriert. Der Federträger ist somit weitestgehend spielfrei im Gehäuse drehbar gelagert, wobei er durch den Dichtungsring 26 bis zum Anschlag der Kante 17 gegen den Widerstandsträger 6 gedrückt wird.

Für das Drehen des Federträgers 19 ist eine Drehmitnehmer 28 vorgesehen, der sich im wesentlichen unterhalb der Trennwand 3 befindet und gegenüber dieser noch von einem Metallring 29 getrennt ist. Das Kunststoff-Gehäuse ist teilweise um den Metallring 29 gespritzt, so daß dieser fest gehalten ist. Der Metallring 29 hat den Zweck einen Reibkontakt zwischen dem Kunststoff des Drehmitnehmers 28, insbesondere dessen angeformten Ring 29' und dem Kunststoff der Trennwand 3 zu verhindern, wenn der Drehmitnehmer gegenüber der Potentiometerachse gekippt ist. Es schleift dann Kunststoff auf Metall, was hinsichtlich Reibwiderstand und Verschleiß günstiger ist als ein Reiben von Kunststoff auf Kunststoff. Ein Schaft 30 des Drehmitnehmers 28 ragt in die zentrale Öffnung des zylindrischen Abschnittes 20 des Federträgers hinein und ist über eine Außenverzahnung 31, die mit einer Innenverzahnung 32 des zylindrischen Abschnittes 20 zusammenwirkt, drehfest mit dem Schleiferträger 19 verbunden.

Zum Ausgleich von Ausfluchtfehlern zwischen einer (nicht dargestellten) Betätigungswelle für das Potentiometer und der Achse 2 des Potentiometers, ist der Drehmitnehmer 28 jedoch pendelnd in dem Federträger gelagert, dergestalt, daß die Achse des Drehmitnehmers gegenüber der Drehachse 2 des Federträgers einen spitzen Winkel einnehmen kann und dabei eine Taumelbewegung des Drehmitnehmers möglich ist. Hierzu ist die mittige Öffnung des zylindrischen Abschnittes 20 mit einem konisch spitz zulaufenden Teil 33 versehen, wobei auch die Außenverzahnung 31 in Richtung zum vorderen, freien Ende des Schaftes 30 konisch spitz zuläuft.

Das freie Ende des Schaftes 30 mündet in einen zylindrischen Abschnitt 34, der durch eine Verengung 35 der mittigen Durchgangsöffnung des Schaftes 20 hindurchragt und sich mit einem radial nach außen vorspringenden Bund 36 an der Außenseite der Verengung 35 abstützt. Ausgehend von dem Bund 36 zum freien Ende hin ist eine Fase 37 vorgesehen sowie ein axial verlaufender Schlitz 38, der ein Durchschieben des Schaftes und des Bundes durch die Verengung 35 gestattet sowie aufgrund der von dem Schlitz 38 erzeugten Elastizität das beschriebene Pendeln gestattet.

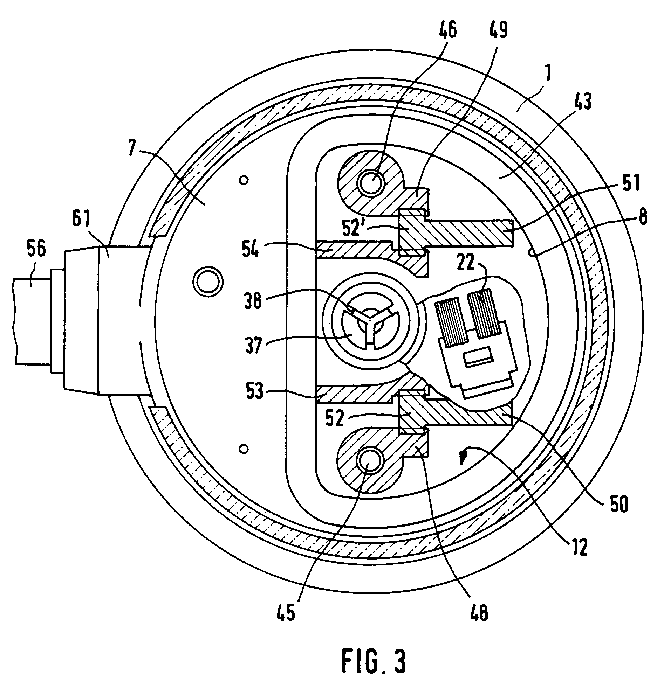

Die Oberseite 12 des Widerstandsträgers 6 ist durch die Öffnung 8 hindurch von oben zugänglich, damit - wie im Zusammenhang mit Fig. 2 und 3 genauer beschrieben wird - der Widerstandswert des Potentiometers bei fertig montiertem Potentiometer noch abgeglichen werden kann. Erst nach diesem Abgleich wird die Öffnung 8 durch den weiteren Deckel 9 verschlossen. Dieser Deckel 9 besitzt einen ins Innere des Gehäuse ragenden Abschnitt 39 und weist an seinem freien Ende eine Rastnase 40 auf, die hinter einer die Öffnung 8 begrenzenden Kante 41 einrastet. Zwischen einem ebenen Teil 42 des weiteren Deckels 9 und einem die Öffnung 8 begrenzenden, radial nach Innen ragenden Bund 43 ist ein Dichtungsring 44 eingespannt, der für einen dichten Abschluß des Deckels 9 sorgt.

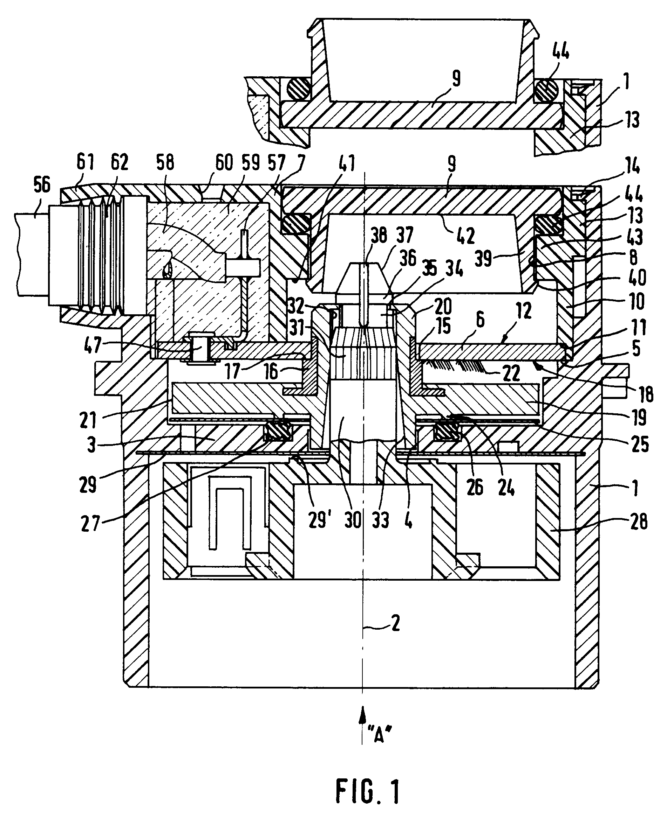

In der oberhalb Fig. 1 abgebildeten Teilansicht ist der Anlieferungszustand des Deckels dargestellt, d.h. er ist noch nicht eingerastet sondern "verkehrt herum" aufgesetzt, da er nach einem einmaligen Einrasten praktisch nicht mehr zerstörungsfrei abgenommen werden kann.

Die auf der Unterseite 18 des Widerstandsträgers 6 aufgebrachte Widerstandsbahn 23 ist durch aufgeniete Durchkontaktierungen 45, 46 sowie eine weitere Durchkontaktierung 47 für einen Mittelabgriff 48 von der Oberseite 6 her elektrisch zugänglich. Die mit den Enden der Widerstandsbahn 23 verbundenen Durchkontaktierungen 45 und 46 sind dabei so angeordnet, daß sie im Bereich der Öffnung 8 liegen.

Die Durchkontaktierungen 45 und 46 sind elektrisch je mit einer Leiterbahn 48 bzw. 49 verbunden, an die je ein Schenkelende eines Abgleichwiderstandes 50 bzw. 51 angeschlossen ist. Diese Abgleichwiderstände 50, 51 sind beispielsweise aus kohlenstoffhaltigem Widerstandslack auf die Oberseite 12 des Widerstandsträgers 6 aufgedruckt. Sie haben in etwa T-förmige Gestalt, wobei derjenige Schenkel 52, 52′, der zwei freie Enden hat (also beim Buchstaben "T" der horizontal verlaufende Schenkel) den Eingang bzw. Ausgang des Abgleichwiderstandes 50 bzw. 51 darstellt. Das andere Ende der Schenkel 52 bzw. 52′ ist wiederum elektrisch mit je einer Leiterbahn 53 bzw. 54 verbunden, die beispielsweise aus Silber auf den Widerstandsträger aufgedruckt ist. Herstelltechnisch werden zunächst die Leiterbahnen 48, 49, 53 und 54 aufgedruckt und dann die Abgleichwiderstände 50 bzw. 51.

Die Abgleichwiderstände 50 und 51 liegen in einer Reihenschaltung zwischen den Leiterbahnen 53 bzw. 54 und der auf der Unterseite 18 des Widerstandsträgers 6 aufgebrachten Widerstandsbahn 23. Da der Gesamtwiderstand des Potentiometers zwischen den beiden Leiterbahnen 53 und 54 gemessen wird, kann also durch Verändern der Abgleichwiderstände 50 und 51 der Gesamtwiderstand des Potentiometers verändert werden. Zur Veränderung der Abgleichwiderstände können diese mit einem Schlitz versehen werden, der in etwa parallel zur Längsachse des senkrecht auf den Schenkeln 52 und 52′ stehenden Schenkels liegt. Je tiefer dieser Schlitz - ausgehend von den Schenkeln 52 bzw. 52′ - in den Abgleichwiderstand geschnitten wird, desto größer wird der elektrische Widerstandswert.

Die Leiterbahnen 53 und 54 werden, wie anhand des Mittelabgriffes in Fig. 1 dargestellt ist, elektrisch mit einem Kabel 56 verbunden und zwar jeweils über eine Lötfahne 57, an die eine Ader 58 des Kabels 56 angelötet ist. Der Raum, in dem sich die Lötfahnen befinden, ist mit einer Vergußmasse 59 ausgefüllt, welche durch eine Öffnung 60 eingebracht werden kann. Ein durch das Gehäuse 1 und den Gehäusedeckel 7 gebildeter Stutzen 61, durch den das Kabel 56 hindurchgeführt ist, kann zusätzlich durch eine Dichtungsmuffe 62 abgedichtet werden.

**Patentansprüche**

1. Drehpotentiometer, insbesondere zur Verwendung als Drehstellungsmeßfühler für die Drehstellung einer Welle, mit
   - einem Gehäuse,
   - einem darin befestigten Widerstandsträger, auf dessen Unterseite eine Widerstandsbahn aufgebracht ist,
   - einem im Gehäuse drehbar gelagerten Federträger,
   - einer am Federträger befestigten Schleiferfeder, die mit der Widerstandsbahn des Widerstandsträgers in schleifendem elektrischen Kontakt steht und
   - Einrichtungen zur Koppelung der Welle mit dem Federträger,
   **dadurch gekennzeichnet**,
   - daß das Gehäuse (1) an seiner den Einrichtungen (28) zur Koppelung der Welle mit dem Federträger (19) abgewandten Seite eine durch einen Deckel (9) verschließbare Öffnung (8) aufweist, durch welche hindurch die der Schleiferfeder (22) abgewandte Oberseite (12) des Widerstandsträgers (6) zugänglich ist, und
   - daß die Widerstandsbahn (23) mittels Durchkontaktierung (45, 46) elektrisch mit mindestens einem an der Oberseite (12) des Widerstandsträgers (6) angeordneten Abgleichwiderstand (50, 51) verbunden ist.

2. Potentiometer nach Anspruch 1, dadurch gekennzeichnet, daß der Abgleichwiderstand (50, 51) auf die Oberseite (12) des Widerstandsträgers (6) aufgedruckt ist.

3. Potentiometer nach Anspruch 2, dadurch gekennzeichnet, daß der Abgleichwiderstand (50, 51) T-förmig ist, wobei die freien Enden desjenigen Schenkels (52, 52′), der zwei freie Enden hat, den Eingang bzw. Ausgang des Abgleichwiderstandes bilden.

4. Potentiometer nach Anspruch 3, dadurch gekennzeichnet, daß der andere Schenkel, der nur ein freies Ende hat, zum Abgleich mit einem im wesentlichen parallel zu seiner Längsachse verlaufenden Schlitz versehen ist.

5. Potentiometer nach einem der Ansprüche 1 bis 4, dadurch gekennzeichnet, daß der Deckel (9) im Gehäuse (1, 7) einrastbar ist.

6. Potentiometer nach Anspruch 5, dadurch gekennzeichnet, daß zwischen dem Deckel (9) und dem Gehäuse (1, 7) ein Dichtungsring (44) vorhanden ist.

**Claims**

1. A rotary potentiometer, particularly for use as a rotary position sensor for the rotary position of a shaft, comprising
   - a housing,
   - a resistance carrier secured therein, on the underside of which there is applied a resistance path,
   - a spring support rotatably mounted in the housing,
   - a brush spring secured to the spring support which is in sliding electrical contact with the resistance path of the resistance carrier, and
   - devices for coupling the shaft with the spring support,
   characterised
   - in that the side of the housing (1) which faces away from the devices (28) for coupling the shaft with the spring support (19) has an opening (8) which may be closed by a cover (9) and through which the upper side (12) of the resistance carrier (6) facing away from the brush spring (22) is accessible, and
   - in that the resistance path (23) is electrically connected by means of through-connection (45, 46) with at least one balancing resistor (50, 51) disposed on the upper side (12) of the resistance carrier (6).

2. A potentiometer according to claim 1, characterised in that the balancing resistor (50, 51) is printed on the upper side (12) of the resistance carrier (6).

3. A potentiometer according to claim 2, characterised in that the balancing resistor (50, 51) is T-shaped, the free ends of the arm (52, 52') which has two free ends forming the input and output respectively of the balancing resistor.

4. A potentiometer according to claim 3, characterised in that the other arm which has only one free end is provided for the purpose of balancing with a slot extending substantially parallel to its longitudinal axis.

5. A potentiometer according to one of claims 1 to 4, characterised in that the cover (9) may be engaged in the housing (1, 7).

6. A potentiometer according to claim 5, characterised in that a sealing ring (44) is present between the cover (9) and the housing (1, 7).

**Revendications**

1. Potentiomètre rotatif, en particulier destiné à être utilisé comme capteur de mesure de position angulaire pour déterminer la position angulaire d'un arbre, comprenant:
   - un boîtier;
   - un support de résistance, fixé à l'intérieur de celui-ci, et sur la face inférieure duquel est déposée une piste résistante;
   - un support de ressort monté rotatif dans le boitier ;
   - un ressort de curseur fixé sur le support de ressort, qui se trouve en contact électrique glissant avec la piste résistante du support de résistance, et,
   - des moyens de couplage de l'arbre avec le support de ressort,
   caractérisé en ce que,
   - le boîtier (1) comporte, sur sa face opposée aux moyens (28) de couplage de l'arbre avec le support de ressort (19), une ouverture (8) susceptible d'être fermée par un couvercle (9) et à travers laquelle la face supérieure (12) du support de résistance (6) opposée au ressort de curseur (22) est accessible ; et
   en ce que :
   - la piste résistante (23) est électriquement reliée à au moins une résistance de réglage (50, 51) disposée sur la face supérieure (12) du support de résistance (6), par l'intermédiaire de contacts traversants (45, 46).

2. Potentiomètre selon la revendication 1, caractérisé en ce que la résistance de réglage (50, 51) est imprimée sur la face supérieure (12) du support de résistance (6).

3. Potentiomètre selon la revendication 2, caractérisé en ce que la résistance de réglage (50, 51) présente une forme en T, les extrémités libres de chaque barre (du T) (52, 52') qui présente deux extrémités libres constituant respectivement l'entrée et la sortie de la résistance de réglage.

4. Potentiomètre selon la revendication 3, caractérisé en ce que l'autre barre (du T) qui n'a qu'une seule extrémité libre, est munie, pour le réglage, d'une fente s'étendant de façon sensiblement parallèle à son arbre longitudinal.

5. Potentiomètre selon l'une quelconque des revendications 1 à 4, caractérisé en ce que le couvercle (9) est susceptible d'être encliqueté dans le boîtier (1, 7).

6. Potentiomètre selon la revendication 5, caractérisé en ce qu'un joint annulaire d'étanchéité (44) est prévu entre le couvercle (9) et le boîtier (1, 7).

FIG. 1

FIG. 2

FIG. 3